# EUROPEAN PATENT APPLICATION

(11) **EP 4 549 308 A1**
(43) Date of publication of application: **07.05.2025**
(21) Application number: 23829415.1
(22) Date of filing: 17.02.2023
(51) Int. Cl.: B63B 35/00, B01D 53/02, C01B 32/50

(54) **CARBON DIOXIDE CAPTURE AND SEQUESTRATION SYSTEM**

(30) Priority: 28.06.2022 CN 202210745173
(71) Applicant: Huaneng Clean Energy Research Institute, Beijing 102209 (CN); Shanghai Shidongkou No.2 Power Plant Huaneng International Power Co. Ltd, Shanghai 200436 (CN)
(72) Inventor: LIU, Rong, Beijing 102209 (CN); ZHENG, Zhaofang, Beijing 102209 (CN); GAO, Shiwang, Beijing 102209 (CN); LIU, Lianbo, Beijing 102209 (CN); NIU, Hongwei, Beijing 102209 (CN); GUO, Dongfang, Beijing 102209 (CN); WANG, Shiqing, Beijing 102209 (CN)
(74) Representative: Albert Catala, Andrea
(86) International application number: PCT/CN2023/076674
(87) International publication number: WO 2024/001222

(57) **Abstract**

A carbon dioxide capture and sequestration system is provided and includes a capture unit, a storage unit, a sequestration unit and a floating body unit. The capture unit is used for capturing carbon dioxide in the atmosphere; the storage unit is connected with the capture unit and is used for storing the carbon dioxide captured by the capture unit; the sequestration unit is connected with the storage unit and is used for sequestrating the carbon dioxide discharged by the storage unit. The capture unit, the storage unit and the sequestration unit are all arranged on the floating body unit so as to float on the sea. The system can sequestrate the captured carbon dioxide in situ and reduce the transportation cost.

## Description

### TECHNICAL FIELD

The disclosure relates to the technical field of carbon dioxide capture and recovery, in particular to a carbon dioxide capture and sequestration system.

### BACKGROUND

In the related technology, the captured carbon dioxide cannot be used and sealed locally in coastal areas, and the captured high-concentration carbon dioxide needs to be transported for a long distance to reach a suitable sequestration place. The transportation capacity of carbon dioxide is large, the transportation distance is long, and the requirements for transportation pipelines are high. Moreover, after being transported to a suitable sequestration place, it often needs to be pressurized before being injected into the ground for sequestration, which leads to high cost of carbon dioxide capture and sequestration.

### SUMMARY

The disclosure aims at solving one of the technical problems in the related art at least to some extent. Therefore, the embodiment of the disclosure proposes a carbon dioxide capture and sequestration system, which can sequestrate the captured carbon dioxide in situ and reduce the transportation cost.

The carbon dioxide capture and sequestration system provided by the embodiment of the disclosure includes: a capture unit, the capture unit is used for capturing carbon dioxide in atmosphere; a floating body unit, where the floating body unit is connected with the capture unit, so that the capture unit floats on sea; a storage unit, where the storage unit is arranged on the floating body unit, and is used for storing the carbon dioxide captured by the capture unit; a sequestration unit, where the sequestration unit is connected with the storage unit, and is used for sequestrating the carbon dioxide discharged by the storage unit.

The carbon dioxide capture and sequestration system of the embodiment of the disclosure can sequestrate the captured carbon dioxide in situ, thus reducing the transportation cost.

In some embodiments, the capture unit includes a capture assembly, the capture assembly includes an adsorption pipe and a heating element, the heating element is sleeved on the adsorption pipe, and a chamber is arranged in the adsorption pipe, and an adsorbent is filled in the chamber.

In some embodiments, the capture assembly further includes a first bracket connected with an outer wall surface of the adsorption pipe, and the first bracket is connected with the floating body unit to fix the adsorption pipe.

In some embodiments, the floating body unit includes a floating body assembly and a fixed assembly, and the fixed assembly is connected with the floating body assembly, so that the floating body assembly floats on the sea.

In some embodiments, the floating body assembly includes a plurality of floating body parts and connectors, and the plurality of floating body parts are connected with each other through the connectors.

In some embodiments, the fixed assembly includes a plurality of anchors and a plurality of anchor blocks, one end of each of the anchors is connected with one of the floating body parts, and an other end of each of the anchors is connected with one of the anchor blocks, and the anchor blocks are fixed on a shore or a seabed.

In some embodiments, the storage unit includes a storage assembly, the storage assembly includes a storage tank and a second bracket, the storage tank is connected with the second bracket, and the second bracket is connected with corresponding one of the floating body parts to fix the storage tank, and the storage tank has an inlet and an outlet, and the inlet is communicated with the chamber.

In some embodiments, the sequestration unit includes a sequestration assembly, the sequestration assembly includes a plurality of transmission pipes and a third bracket, the transmission pipes are connected with the third bracket, and the plurality of transmission pipes are connected in sequence; one end of one of the transmission pipes is communicated with the storage tank, and an other end of one of the transmission pipes extends into a seabed saline water layer.

In some embodiments, the carbon dioxide capture and sequestration system further includes an energy supply unit, where the energy supply unit includes a photovoltaic assembly and/or a wind power assembly, and the energy supply unit is respectively connected with the capture unit and the sequestration unit.

In some embodiments, the carbon dioxide capture and sequestration system further includes a fan and a fourth bracket, where the fan is connected with the fourth bracket and the fourth bracket is connected with corresponding one of the floating body parts, and a height of the fourth bracket is adjustable, so that the fan and the adsorption pipe are at a same height.

### BRIEF DESCRIPTION OF THE DRAWINGS

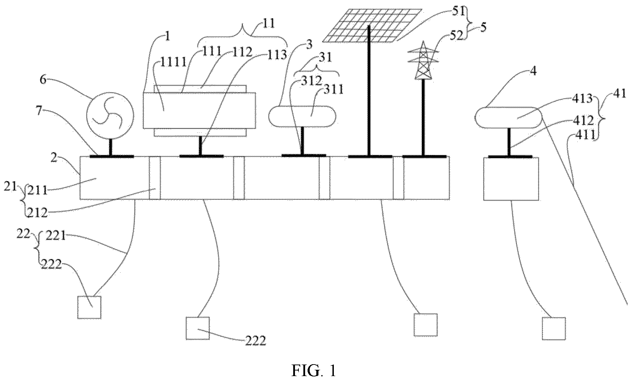

FIG. 1 is a schematic diagram of a carbon dioxide capture and sequestration system according to an embodiment of the disclosure.

List of reference characters: 1 capture unit; 11 capture assembly; 111 adsorption pipe; 1111 chamber; 112 heating element; 113 first bracket; 2 floating body unit; 21 floating body assembly; 211 floating body part; 212 connector; 22 fixed assembly; 221 anchor; 222 anchor block; 3 storage unit; 31 storage assembly; 311 storage tank; 311 storage tank; 312 second bracket; 4 sequestration unit; 41 sequestration assembly; 411 transmission pipe; 412 third bracket; 413 sequestration tank; 5 energy supply unit; 51 photovoltaic assembly; 52 wind power assembly; 6 fan; and 7 fourth bracket.

### DETAILED DESCRIPTION OF THE EMBODIMENTS

In the following, embodiments of the disclosure will be described in detail, examples of the embodiments are illustrated in the accompanying drawings. The embodiments described below by referring to the attached drawings are exemplary and are intended to explain the disclosure, but not to be construed as limitations of the disclosure.

As shown in FIG. 1, the carbon dioxide capture and sequestration system of the embodiment of the disclosure includes a capture unit 1, a floating body unit 2, a storage unit 3 and a sequestration unit 4.

The capture unit 1 is used for capturing carbon dioxide in atmosphere. The floating body unit 2 is connected with the capture unit 1, so that the capture unit 1 floats on the sea. The storage unit 3 is arranged on the floating body unit 2, and the storage unit 3 is used for storing the carbon dioxide captured by the capture unit 1. The sequestration unit 4 is connected with the storage unit 3, and the sequestration unit 4 is used for sequestrating the carbon dioxide discharged by the storage unit 3.

Optionally, the capture unit 1, the storage unit 3 and the sequestration unit 4 are all arranged above the floating body unit 2. The capture unit 1 captures carbon dioxide in the atmosphere, and the captured carbon dioxide is released and transmitted to the storage unit 3, the storage unit 3 transmits the stored carbon dioxide to the sequestration unit 4, and the sequestration unit 4 sequestrates the received carbon dioxide.

Optionally, air enters the capture unit 1 through the left end of the capture unit 1, and the capture unit 1 adsorbs carbon dioxide in the air, and the air after carbon dioxide adsorption is transmitted to the atmosphere through the right end of the capture unit 1.

Optionally, the left end of the storage unit 3 is connected with the right end of the capture unit 1. When the capture unit 1 releases the captured carbon dioxide, the carbon dioxide is transmitted to the storage unit 3 through the right end of the capture unit 1, and the storage unit 3 stores the received carbon dioxide.

Optionally, the left end of the sequestration unit 4 is connected with the right end of the storage unit 3, and the stored carbon dioxide is transmitted to the sequestration unit 4 through the storage unit 3, and the sequestration unit 4 sequesters the received carbon dioxide to the seabed.

For example, the sequestration unit 4 can also be arranged on a dedicated floating platform.

In the embodiment of the disclosure, the capture unit 1, the storage unit 3 and the sequestration unit 4 are arranged to capture and sequestrate carbon dioxide. Compared with the related art, the captured high-purity carbon dioxide needs to be transported to a suitable sequestration place for sequestration in a long distance, and the long-distance transportation also has high requirements on transportation pipelines. In this embodiment, long-distance transportation is not required. By arranging the capture unit 1 on the floating unit, the capture unit 1 captures carbon dioxide on the sea, and the storage unit 3 and the sequestration unit 4 transmit and sequestrate the carbon dioxide, thus realizing the in-situ capture and transmission of carbon dioxide and reducing the transportation cost.

Optionally, by arranging the floating body unit 2 on the sea and arranging the capture unit 1 and the sequestration unit 4 on the floating body unit 2, compared with the land resources that need to be occupied when the capture unit 1 and the sequestration unit 4 are arranged on the land in the related art, the embodiment of the disclosure does not need to occupy land resources, thus saving the consumption of land resources.

In some embodiments, the capture unit 1 includes a capture assembly 11, the capture assembly 11 includes an adsorption pipe 111 and a heating element 112, the heating element 112 is sleeved on the adsorption pipe, a chamber 1111 is arranged in the adsorption pipe 111, and the chamber 1111 is filled with an adsorbent.

Specifically, the heating element 112 is arranged on the outer peripheral surface of the adsorption pipe 111 for heating the adsorption pipe 111. The adsorption pipe 111 is a horizontally placed pipe body, a chamber 1111 is formed in the pipe body, and the adsorbent is filled in the chamber 1111.

It can be understood that baffles are provided at the left and right ends of the adsorption pipe 111 to prevent the adsorbent from being taken out of the adsorption pipe 111 by air.

Optionally, when the atmosphere enters the adsorption pipe 111 through the left end of the capture unit 1, carbon dioxide in the atmosphere is adsorbed by the adsorbent in the chamber 1111, and when the carbon dioxide content in the adsorbent reaches a preset content, the adsorption pipe 111 is heated by the heating element 112 to release high-purity carbon dioxide, and the released high-purity carbon dioxide is transmitted to the storage unit 3 for storage.

Optionally, the adsorbent adsorbs carbon dioxide at normal temperature and pressure, and then releases carbon dioxide through the change of the adsorption rate of carbon dioxide on the adsorbent at different temperatures, and the regeneration temperature is 80-100 °C.

The adsorbent in the embodiment of the disclosure adopts a solid adsorbent. Compared with the absorption solvent in the related art, the solid adsorbent can make the volume of the capture unit 1 smaller, and the operation of adsorption and release is simple.

In some embodiments, the capture assembly 11 further includes a first bracket 113, the first bracket 113 is connected with an outer wall surface of the adsorption pipe 111, and the first bracket 113 is connected with the floating body unit 2 to fix the adsorption pipe 111.

Specifically, the first bracket 113 is arranged above the floating body unit 2 and fixedly connected with the floating body unit 2. The height of the first bracket 113 can be adjusted. By adjusting the height of the first bracket 113, the height of the adsorption pipe 111 can be adjusted, which is convenient for air with a larger flow to enter the adsorption pipe 111.

Optionally, the first bracket 113 is connected with the adsorption pipe 111 through the heating element 112, that is, the first bracket 113 is connected with the outer wall surface of the heating element 112.

For example, the connection between the first bracket 113 and the floating body unit 2 is detachable. By adjusting the position of the first bracket 113 on the floating body unit 2, the adsorption pipe 111 can adsorb air at different angles and positions, and the capture range of the capture unit 1 can be enlarged.

In some embodiments, the floating body unit 2 includes a floating body assembly 21 and a fixed assembly 22, and the fixed assembly 22 is connected with the floating body assembly 21 to float the floating body assembly 21 on the sea.

Specifically, the fixed assembly 22 can be connected with the seabed or shore, so that the floating body assembly 21 can float on the sea, and the floating safety of the floating body assembly 21 can be improved through the cooperation between the floating body assembly 21 and the fixed assembly 22.

In some embodiments, the floating body assembly 21 includes a plurality of floating body parts 211 and connectors 212, and the plurality of floating body parts 211 are connected through the connectors 212.

Specifically, a plurality of floating body parts 211 are connected through the connectors 212, and the floating body parts 211 can float on the water surface, and can automatically rise and fall with the fluctuation of the water tide, so that the stability of the floating body parts 211 on the water surface is improved.

For example, when the floating body part 211 is a pontoon, there are four earrings at four corners of the pontoon, and the connector 212 includes a mushroom head, the mushroom head passes through the positioning earrings on the pontoon to connect the pontoon, and then the mushroom head is tightened by a wrench to improve the connection stability between the floating body parts 211.

For example, when the floating body part 211 is a floating box, the outer side surface of the floating box is provided with a connecting lug, and the connector 212 is provided with two connecting parts, and the connector 212 passes through the connecting lugs of two adjacent floating boxes in turn to connect the two floating boxes, and the connector 212 can be a bolt, through the connection of the connector 212, the connection between the floating box is firmer.

For example, when the floating body part 211 is a floating pipe, the connector 212 is a flange, and the pontoons are connected with each other through the flange. The connection mode of the flange makes the connection between the floating pipe and the pontoons more stable.

According to the embodiment of the disclosure, the connection stability between the floating body parts 211 can be improved through the arrangement of the connector 212, and the detachable connection between the connectors 212 and the floating body parts 211 is convenient for the combination of different shapes of the floating body parts 211, so that the disassembly is more convenient, and the application range of the floating body unit 2 is improved.

In some embodiments, the fixed assembly 22 includes a plurality of anchors 221 and a plurality of anchor blocks 222, one end of the anchor 221 is connected with the floating body part 211, and the other end of the anchor 221 is connected with the anchor block 222, the anchor blocks 222 are fixed on the shore or seabed.

Specifically, the anchor block 222 is fixed on the seabed or shore, the upper end of the anchor 221 is connected with the floating body part 211, and the lower end of the anchor 221 is connected with the anchor block 222, so that the position of the floating body part 211 is fixed. The floating effect of the floating body part 211 on the water and the fixing effect of the anchor 221 on the floating body part 211 make the floating body part 211 float stably on the water.

For example, the anchor 221 is an anchor chain.

For example, according to the difference of water depth, waves and tides at the installation position of the floating body part 211, the cable shore fixing method is adopted, and the anchor block 222, the anchor 221, the tension spring, the stay cable and the stay rod are combined. When it is near the shore, the combination of shore fixation and water area fixation can be adopted. The shore is fixed by stay rods and steel ropes, and the underwater anchorage method is adopted, so that the floating body assembly 21 is fixed by the fixed assembly 22.

In some embodiments, the storage unit 3 includes a storage assembly 31, the storage assembly 31 includes a storage tank 311 and a second bracket 312, the storage tank 311 is connected with the second bracket 312, and the second bracket 312 is connected with the floating body part 211 to fix the storage tank 311, and the storage tank 311 has an inlet and an outlet, and the inlet is communicated with the chamber 1111.

Specifically, the storage tank 311 is placed horizontally, the left end of the storage tank 311 is connected with the capture unit 1, the right end of the storage tank 311 is connected with the sequestration unit 4, and the position of the storage tank 311 is fixed by the second bracket 312.

Optionally, the second bracket 312 is arranged above and fixedly connected with the floating body part 211, and the height of the second bracket 312 can be adjusted. By adjusting the height of the second bracket 312, the height position of the storage tank 311 can be adjusted, which facilitates the connection of the storage tank 311 with the capture unit 1 and the sequestration unit 4 and improves the flexibility of the position of the storage tank 311.

For example, the connection between the second bracket 312 and the floating body part 211 is detachable. By adjusting the position of the second bracket 312 on the floating body part 211, the storage tank 311 can be set in different positions, so that the convenience of connection between the storage tank 311 and the capture unit 1 can be improved.

In some embodiments, the sequestration unit 4 includes a sequestration assembly 41, the sequestration assembly 41 includes a plurality of transmission pipes 411 and a third bracket 412, the transmission pipes 411 are connected with the third bracket 412, and the plurality of transmission pipes 411 are connected in sequence; one end of one of the transmission pipes 411 is communicated with the storage tank 311, and an other end of one of the transmission pipes 411 extends into a seabed saline water layer.

Specifically, the sequestration assembly 41 includes a plurality of transmission pipes 411, the plurality of transmission pipes 411 are connected in sequence to inject the received carbon dioxide into the water body or the seabed.

Optionally, the sequestration assembly 41 may further include a sequestration tank 413, the sequestration tank 413 is used for adjusting the flow rate and opening and closing of the carbon dioxide transmitted by the transmission pipe 411.

Optionally, the third bracket 412 is arranged above and fixedly connected with the floating body part 211, and the height of the third bracket 412 can be adjusted. By adjusting the height of the third bracket 412, the height position of the sequestration tank 413 can be adjusted, which is convenient for the connection between the sequestration tank 413 and the storage tank 311 and improves the flexibility of the position of the sequestration tank 413.

For example, the connection between the third bracket 412 and the floating body part 211 is detachable. By adjusting the position of the third bracket 412 on the floating body part 211, the sequestration tank 413 is set in different positions, so that the convenience of connecting the storage tank 311 with the storage unit 3 is improved.

In some embodiments, the carbon dioxide capture and sequestration system further includes an energy supply unit 5, where the energy supply unit 5 includes a photovoltaic assembly 51 and/or a wind power assembly 52, and the energy supply unit 5 is respectively connected with the capture unit 1 and the sequestration unit 4.

Specifically, the photovoltaic assembly 51 can be arranged on the floating body part 211. The wind power assembly 52 can be separately arranged on a separate floating platform or on the floating body part 211. The energy supply unit 5 is connected with the capture unit 1 and the sequestration unit 4 to provide electric energy for the capture unit 1 and the sequestration unit 4.

For example, the wind power assembly 52 and/or photovoltaic assembly 51 can be connected with the capture unit 1 through a transformer, so as to convert the electric energy provided by the wind power assembly 52 and/or photovoltaic assembly 51 into the electric energy that can be directly utilized by the capture unit 1.

For example, the wind power assembly 52 and/or photovoltaic assembly 51 can be connected with the sequestration unit 4 through a transformer, so as to convert the electric energy provided by the wind power assembly 52 and/or photovoltaic assembly 51 into the electric energy that can be directly utilized by the sequestration unit 4.

In the embodiment of the disclosure, the power supply unit provides electric energy for the capture unit 1 and the sequestration unit 4, so that the energy consumption cost of the carbon dioxide capture and sequestration system can be reduced, zero emission can be realized, the target of capturing carbon dioxide is matched, the power supply unit is set as a renewable energy source to reduce carbon emission, and solar energy and wind energy on the sea can be collected and stored by means of a storage battery, which has great commercial value.

In some embodiments, the carbon dioxide capture and sequestration system further includes a fan 6 and a fourth bracket 7, where the fan 6 is connected with the fourth bracket 7 and the fourth bracket 7 is connected with the floating body part 211, and a height of the fourth bracket 7 is adjustable, so that the fan 6 and the adsorption pipe 111 are at a same height.

Specifically, by absorbing air through the fan 6, the speed at which the air enters the capture unit 1 can be improved, and the capture unit 1 can absorb carbon dioxide at normal temperature and pressure, thus improving the absorption efficiency of the capture unit 1. Through the arrangement of the fourth bracket 7, the height of the fan 6 and the absorption pipe 111 can be adjusted, and the fan 6 and the absorption pipe 111 are at the same height, which is convenient for the fan 6 to suck the air into the absorption pipe 111.

Optionally, the fourth bracket 7 is arranged above and fixedly connected with the floating body part 211, and the height of the fourth bracket 7 is adjustable. By adjusting the height of the fourth bracket 7, the height position of the fan 6 can be adjusted, which facilitates the height adjustment between the fan 6 and the adsorption pipe 111 and improves the flexibility of the position of the fan 6.

For example, the connection between the fourth bracket 7 and the floating body part 211 is detachable. By adjusting the position of the fourth bracket 7 on the floating body part 211, the fan 6 is set in different positions to adapt to the adjustment of different positions of the adsorption pipe 111.

In the description of this disclosure, it should be understood that the azimuth or positional relationship indicated by the terms "center", "longitudinal direction", "transverse direction", "length", "width", "thickness", "up", "down", "front", "back", "left", "right", "vertical", "horizontal", "top", "bottom", "inside", "outside", "clockwise", "counterclockwise", "axial", "radial", "circumferential" and so on is based on the azimuth or positional relationship shown in the attached drawings. It is only for the convenience of describing the disclosure and simplifying the description, and does not indicate or imply that the referred devices or elements must have a specific orientation, be constructed and operated in a specific orientation, so it cannot be understood as a limitation of the disclosure.

In addition, the terms "first" and "second" are only used for descriptive purposes, and cannot be understood as indicating or implying relative importance or implicitly indicating the number of indicated technical features. Therefore, the features defined as "first" and "second" can explicitly or implicitly include at least one of these features. In the description of this disclosure, "a plurality of" means at least two, such as two, three, etc., unless otherwise specifically defined.

In this disclosure, unless otherwise specified and limited, the terms "installation", "connection", "connect" and "fixation" should be broadly understood, for example, they can be a fixed connection, can also be a detachable connection or integrated connection. They can be mechanically connected, can also be electrically connected or communicated with each other. They can be directly connected, can also be indirectly connected through an intermediary. They can be the internal communication between two elements or the interaction between two elements, unless otherwise explicitly defined. For those ordinary skilled in the art, the specific meanings of the above terms in this disclosure can be understood according to the specific circumstances.

In this disclosure, unless otherwise specified and limited, the first feature "above" or "below" the second feature may be that the first and second features are in direct contact, or the first and second features are in indirect contact through an intermediary. Moreover, the first feature is "up", "above" and "on" the second feature, which can mean that the first feature is directly above or obliquely above the second feature, or just means that the horizontal height of the first feature is higher than the second feature. The first feature is "under", "down" and "beneath" the second feature can mean that the first feature is directly or obliquely below the second feature, or just means that the horizontal height of the first feature is smaller than the second feature.

In this disclosure, the terms "one embodiment", "some embodiments", "example", "specific example" or "some examples" etc. mean that the specific features, structures, materials or characteristics described in connection with this embodiment or example are included in at least one embodiment or example of this disclosure. In this description, the schematic expressions of the above terms are not necessarily aimed at the same embodiment or example. Moreover, the specific features, structures, materials or characteristics described may be combined in any one or more embodiments or examples in a suitable manner. In addition, those skilled in the art can combine and integrate different embodiments or examples and features of different embodiments or examples described in this description without contradicting each other.

Although the embodiments of the disclosure have been shown and described above, it can be understood that the above embodiments are exemplary and cannot be understood as limitations of the disclosure, and those ordinary skilled in the art can make changes, modifications, substitutions and variations to the above embodiments within the scope of the disclosure.

## Claims

1. A carbon dioxide capture and sequestration system, comprising:
a capture unit, wherein the capture unit is used for capturing carbon dioxide in atmosphere;
a floating body unit, wherein the floating body unit is connected with the capture unit, so that the capture unit floats on sea;
a storage unit, wherein the storage unit is arranged on the floating body unit, and is used for storing the carbon dioxide captured by the capture unit;
a sequestration unit, wherein the sequestration unit is connected with the storage unit, and is used for sequestrating the carbon dioxide discharged by the storage unit.

2. The carbon dioxide capture and sequestration system according to claim 1, wherein the capture unit comprises a capture assembly, the capture assembly comprises an adsorption pipe and a heating element, the heating element is sleeved on the adsorption pipe, and a chamber is arranged in the adsorption pipe, and an adsorbent is filled in the chamber.

3. The carbon dioxide capture and sequestration system according to claim 2, wherein the capture assembly further comprises a first bracket connected with an outer wall surface of the adsorption pipe, and the first bracket is connected with the floating body unit to fix the adsorption pipe.

4. The carbon dioxide capture and sequestration system according to claim 2, wherein the floating body unit comprises a floating body assembly and a fixed assembly, and the fixed assembly is connected with the floating body assembly, so that the floating body assembly floats on the sea.

5. The carbon dioxide capture and sequestration system according to claim 4, wherein the floating body assembly comprises a plurality of floating body parts and connectors, and the plurality of floating body parts are connected with each other through the connectors.

6. The carbon dioxide capture and sequestration system according to claim 5, wherein the fixed assembly comprises a plurality of anchors and a plurality of anchor blocks, one end of each of the anchors is connected with one of the floating body parts, and an other end of each of the anchors is connected with one of the anchor blocks, and the anchor blocks are fixed on a shore or a seabed.

7. The carbon dioxide capture and sequestration system according to claim 5, wherein the storage unit comprises a storage assembly, the storage assembly comprises a storage tank and a second bracket, the storage tank is connected with the second bracket, and the second bracket is connected with corresponding one of the floating body parts to fix the storage tank, and the storage tank has an inlet and an outlet, and the inlet is communicated with the chamber.

8. The carbon dioxide capture and sequestration system according to claim 1, wherein the sequestration unit comprises a sequestration assembly, the sequestration assembly comprises a plurality of transmission pipes and a third bracket, the transmission pipes are connected with the third bracket, and the plurality of transmission pipes are connected in sequence; one end of one of the transmission pipes is communicated with the storage tank, and an other end of one of the transmission pipes extends into a seabed saline water layer.

9. The carbon dioxide capture and sequestration system according to any one of claims 1 to 8, further comprising an energy supply unit, wherein the energy supply unit comprises a photovoltaic assembly and/or a wind power assembly, and the energy supply unit is respectively connected with the capture unit and the sequestration unit.

10. The carbon dioxide capture and sequestration system according to claim 2, wherein further comprising a fan and a fourth bracket, wherein the fan is connected with the fourth bracket and the fourth bracket is connected with corresponding one of the floating body parts, and a height of the fourth bracket is adjustable, so that the fan and the adsorption pipe are at a same height.
